# FASCICULE DE BREVET EUROPEEN

(11) **EP 1 205 446 B1**
(45) Date de publication et mention de la délivrance du brevet: **26.01.2005**
(21) Numéro de dépôt: 01402847.6
(22) Date de dépôt: 05.11.2001
(51) Int. Cl.: C03B 5/235, C03B 5/237

(54) **REGENERATEUR DE FOUR VERRIER**
REGENERATOR EINES GLASSCHMELZOFENS
GLASS FURNACE REGENERATOR

(30) Priorité: 07.11.2000 FR 0014257
(43) Date de publication de la demande: 15.05.2002
(73) Titulaire: Saint-Gobain Centre de Recherches et d'Etudes Européen, 92400 Courbevoie (FR)
(72) Inventeur: Zanoli, Alain, 84000 Avignon (FR); Boussant-Roux, Yves, 84140 MONTFAVET (FR); Citti, Olivier c/o Saint-Gobain Centre de, Alphonse Jauffret 84306 CAVAILLON (FR)
(74) Mandataire: Colas, Jean-Pierre

(56) Documents cités:
- FR-A- 2 756 820

## Description

L'invention concerne un régénérateur de four verrier faisant simultanément office de dispositif de captation des impuretés présentes dans les effluents gazeux pour réduire les émissions de poussières.

La plupart des fours de verrerie dits à flammes, c'est-à-dire ayant comme source d'énergie des brûleurs à gaz ou à fuel, sont équipés de régénérateurs. Ces régénérateurs sont une succession de chambres garnies d'éléments céramiques formant un empilage et permettant de récupérer et restituer la chaleur selon les cycles. Les gaz chauds ou fumées qui proviennent du four en fonctionnement entrent dans l'empilage en général par la partie haute du régénérateur et libèrent leur énergie calorifique dans l'empilage. Pendant ce temps, de l'air froid est amené en bas d'un autre empilage chauffé au cours du cycle précédent pour récupérer l'énergie calorifique ; cet air sort chaud en haut de l'empilage d'où il est conduit jusqu'aux brûleurs du four pour assurer la combustion du carburant dans les meilleures conditions.

La conduite des fours de fusion du verre est telle que l'on a d'importants effluents gazeux. Des poussières se forment dans ces effluents au cours de leur refroidissement entre l'entrée et la sortie des régénérateurs. Le terme " poussières " correspond aux émissions particulaires, c'est-à-dire toute substance organique ou inorganique solide (sans limitation de taille) ou liquide (gouttelette).

Ces poussières proviennent essentiellement de la condensation d'espèces chimiques provenant de la volatilisation et recombinaison de composés présents dans le bain de verre au cours de son élaboration. Elles sont aussi dues à la présence d'impuretés contenues dans les carburants. Elles proviennent également, dans une moindre mesure, de l'envolement de ces matières premières sous forme solide.

Il est connu de l'homme de l'art qu'une partie de ces poussières, plus ou moins grande en fonction des conditions de fonctionnement du four, peut être déposée lors du passage dans les régénérateurs. Ces dépôts ont tendance à obstruer les canaux de passage des fumées et de l'air. Jusqu'à ce jour, on a toujours cherché à développer des conceptions d'empilage permettant de limiter ce phénomène de bouchage.

FR-A-2756820 propose un procédé de chauffage sélectif des empilages classiques afin de déboucher les parties obstruées par le dépôt de poussières.

Aujourd'hui, dans de nombreux pays, les normes en vigueur vont vers une réglementation et une diminution de plus en plus sévères des émissions particulaires.

Ainsi, les verriers sont amenés à étudier de nouveaux moyens pour réduire les émissions particulaires issues des fours de fusion du verre.

Actuellement, plusieurs solutions sont utilisées.

La plus répandue est le précipitateur électrostatique. Ce type de dispositif permet de collecter la grande majorité des émissions particulaires mais présente de lourds inconvénients. En effet, l'investissement ainsi que les coûts d'exploitation d'un tel appareillage sont très importants. Par ailleurs, les gaz acides endommagent rapidement le dispositif et il est donc recommandé de traiter ces gaz préalablement au passage dans le filtre ce qui représente une contrainte supplémentaire.

On rencontre également des filtres à manche et, plus généralement, des filtres à membrane. Ils permettent également de collecter la grande majorité des émissions particulaires mais présentent les mêmes inconvénients que le dispositif décrit ci-dessus. De plus, ce type de filtre fonctionne à basse température ce qui rend nécessaire un refroidissement préalable au traitement des fumées dans le filtre. Enfin, l'ajout d'un dispositif de filtration annexe entraîne des difficultés de conduite du four en raison des pertes de charge qu'il génère.

Il existe donc un besoin pour un dispositif de réduction des poussières émises dans les fumées des fours de verrerie efficace et qui ne présente pas les inconvénients des systèmes actuels.

L'invention vise à satisfaire ce besoin en proposant un régénérateur faisant simultanément office de dispositif de captation pour collecter les impuretés présentes dans les effluents gazeux des fours de verrerie et ainsi limiter la formation de poussières et, donc, le recours à un système de filtration annexe.

Ce besoin est satisfait grâce à un empilage de régénérateur présentant un arrangement permettant de favoriser, optimiser et contrôler la condensation des espèces génératrices de poussières à la surface des pièces réfractaires constituant l'empilage, l'empilage conservant bien évidemment son rôle d'échangeur thermique.

Plus précisément, l'invention concerne un régénérateur de four de verrerie conforme à la revendication 1.

D'autres caractéristiques avantageuses de la présente invention sont définies dans les revendications dépendantes 2 à 9.

Par "surface projetée des canaux", on entend la plus grande surface délimitée par des parois réfractaires en vue de dessus. Par exemple, un rétrécissement des canaux ou bien le décalage des canaux sur deux rangs successives se traduisent par une diminution de la surface projetée des canaux. La diminution de surface projetée doit être d'au moins 20% pour qu'on obtienne un effet significatif.

Par "rang" on entend un étage ou couche d'éléments empilés.

Avantageusement, l'empilage du présent régénérateur est réalisé, au moins en partie, avec des éléments empilables cruciformes électrofondus.

Pour les besoins de l'étude, nous avons développé un dispositif permettant d'évaluer la quantité de poussières contenue dans les fumées sur site industriel. Il s'agit d'une canne de prélèvement en inox refroidie à l'eau. Ce dispositif permet d'extraire de manière isocinétique un échantillon représentatif de fumées circulant dans les empilages dans des conditions de prélèvement contrôlées. Les particules solides sont recueillies sur un filtre, alors que le flux gazeux traverse une série de flacons-laveurs contenant des solutions d'absorption appropriées. Les analyses du filtrat et des solutions de lavage permettent de quantifier la concentration en poussières déjà formées ainsi que les teneurs en espèces sous forme vapeur susceptibles de générer des poussières. Le dispositif peut être utilisé sur l'ensemble de la gamme de température et de vitesse rencontrées dans les empilages et permet ainsi de suivre les évolutions entre le haut et le bas d'une chambre de régénérateur.

L'étude des poussières recueillies sur le filtre a permis de vérifier que les poussières des fours de verrerie sont des particules de très petite taille (inférieure au micromètre) et sont constituées très majoritairement de sulfate de sodium (en particulier lorsque le verre fabriqué est un verre de type sodo-calcique). Ce sulfate de sodium résulte de la réaction entre du Na₂O à l'état de vapeur (provenant de la volatilisation d'espèces au niveau du lit de des matières premières et au dessus du bain de verre lui-même) et du SO₂ provenant du fuel et des matières premières. Il se condense en dessous d'environ 1100°C puis se solidifie lors du refroidissement des fumées en dessous d'environ 900°C. Ces étapes ont lieu au cours du refroidissement des fumées et donc, dans les régénérateurs lorsqu'il y en a.

A l'entrée de l'empilage, le SO₂ ainsi que l'oxyde de sodium sont sous forme gazeuse. Du fait du fonctionnement cyclique des empilages, la température des réfractaires est inférieure à celle des fumées. Un gradient de température s'établit donc entre les fumées au centre du canal et les fumées au contact des parois réfractaires. Dès que la température des éléments de l'empilage devient inférieure à la température de condensation du sulfate de sodium, le phénomène de condensation débute à la surface des éléments réfractaires. Puis, lorsque la température des fumées devient sensiblement égale à la température de condensation du sulfate de sodium, on assiste à une condensation spontanée de ce dernier sous forme de brouillard au centre du canal. Une partie des gouttelettes constituant ce brouillard vient se déposer sur les parois réfractaires. Lorsque la température des fumées devient inférieure à la température de solidification du sulfate de sodium, les gouttelettes passent de l'état liquide à l'état solide.

Les mesures que nous avons réalisées sur différents fours industriels nous on permis d'établir et de valider ce mécanisme de formation des poussières.

Par la suite nous nous intéresserons essentiellement aux poussières de sulfate de sodium ; les phénomènes mis en évidence se produisent aussi, mais à des températures sensiblement différentes, pour d'autres espèces (sulfate, chlorure, borates de métaux alcalins et alcalino-terreux).

Il nous est donc apparu que pour diminuer le taux de poussières émises en utilisant les empilages de régénérateurs, il faut que ceux-ci soient capables de maximiser la condensation, sur les réfractaires constituant l'empilage, des espèces chimiques susceptibles de générer des poussières.

Le but de l'invention est d'offrir différentes solutions permettant d'atteindre cet objectif. Contrairement aux régénérateurs classiques où la totalité de l'empilage a pour unique but de réaliser des transferts de chaleur, les différentes variantes d'empilages selon l'invention présentent toutes trois zones ayant chacune un rôle spécifique. La première zone rencontrée par les fumées est une zone visant à conditionner les fumées pour que l'efficacité de la zone centrale soit maximale. Ainsi, il s'agit en particulier de maintenir les espèces génératrices de poussières sous forme de vapeur et d'amener les fumées à une température supérieure, mais proche de la température de condensation de ces espèces. Ce conditionnement thermique rapide doit permettre de laisser une plus grande place à la zone centrale où ont réellement lieu les phénomènes de captation. Les diverses configurations possibles de cette zone centrale sont en effet destinées à intensifier le condensation, puis le dépôt des gouttelettes à la surface des éléments de l'empilage.

La troisième et dernière zone est conçue pour faciliter l'évacuation naturelle ou forcée des condensats et autre dépôts provenant, par écoulement gravitationnel, des zones précédentes.

Les empilages de l'invention peuvent être réalisés avec tous les types d'éléments réfractaires frittés ou fondus utilisés classiquement. Les exemples donnés dans la présente demande font référence à différents éléments électrofondus cruciformes, fabriqués et commercialisés par la Société Européenne des Produits Réfractaires (SEPR) pour le garnissage des chambres des régénérateurs. En effet, ces produits conviennent parfaitement bien pour cette application puisqu'ils présentent une très faible réactivité vis-à-vis des vapeurs alcalines contenues dans les fumées et résistent très bien aux hautes températures et aux cycles thermiques imposés par le fonctionnement des régénérateurs. Par ailleurs, la surface spécifique d'échange thermique de ces pièces est importante ce qui favorise les échanges thermiques et permet d'atteindre de très bons rendements de régénération. D'autre part, le matériau réfractaire électrofondu constituant les éléments cruciformes de la SEPR est particulièrement bien adapté pour supporter des opérations de nettoyage des empilages par traitement thermique.

La description qui va suivre ainsi que les différents schémas permettront de mieux comprendre l'invention.
La figure 1 est une vue schématique en coupe verticale d'un empilage de régénérateur selon l'invention.
La figure 2 est une vue en coupe selon la ligne I-I de la figure 1 d'une partie de la zone centrale d'un empilage de régénérateur selon l'invention.
La figure 3 est une vue semblable à celle de la figure 2 mais illustrant une variante de réalisation d'un empilage de générateur selon l'invention.
La figure 4 est une vue schématique en coupe verticale illustrant une autre variante de réalisation de la zone centrale d'un empilage selon l'invention.
La figure 5 est une vue schématique en coupe illustrant encore une autre variante de réalisation de la zone centrale d'un empilage selon l'invention.

Toutes les figures sont à la même échelle concernant la largeur des canaux.

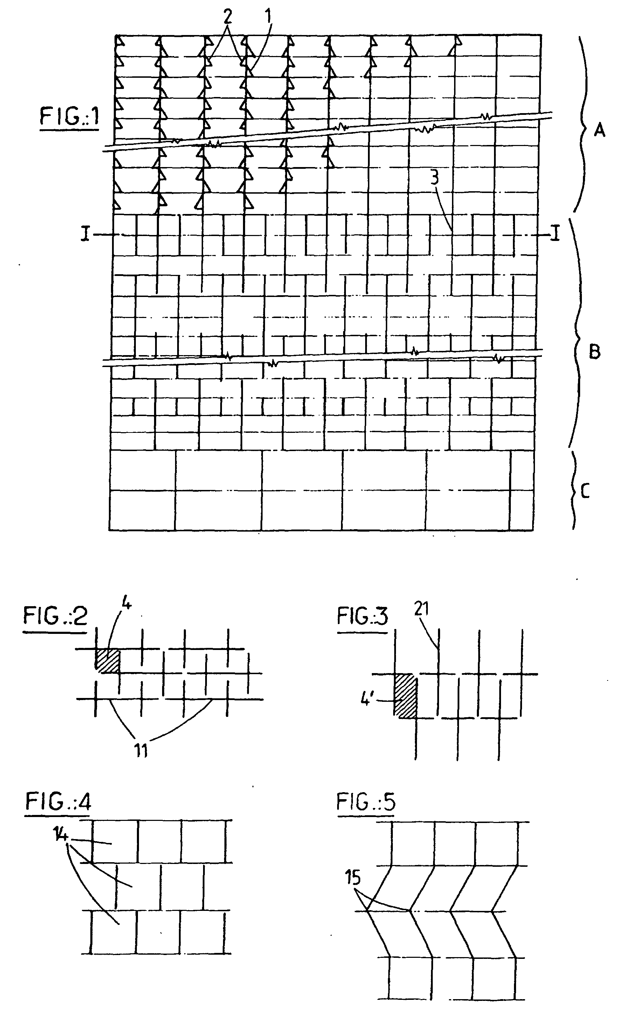

La figure 1 montre un empilage avec les trois zones A, B et C.

Dans la zone chaude A, c'est-à-dire la première zone rencontrée par les fumées, on utilise des éléments réfractaires cruciformes 1 présentant des obstacles ou corrugations 2 tels que ceux décrits dans EP-B-354844. En effet, leur efficacité thermique est très importante. La différence de température entre les fumées et les parois réfractaires est grande. Cette zone permet donc d'abaisser rapidement la température des fumées jusqu'à la température de début de condensation. Pour cette zone, toute pièce ou arrangement de pièces présentant une très forte efficacité thermique peut convenir. Il faut également, comme c'est le cas dans les empilages actuels, que les pièces résistent bien aux très hautes températures ainsi qu'à l'atmosphère chargée d'espèces chimiques agressives. La hauteur de cette zone A dépend de la conduite du four (tirée, excès d'air, ...) et en particulier de la température et du débit auxquels les fumées arrivent dans l'empilage.

Dans la zone centrale B, on a utilisé des éléments cruciformes lisses 3 de type 3 et de type 6 de la SEPR. Dans toute la zone, on a eu recours à divers arrangements des éléments selon les rangs de manière à créer de nombreuses zones de transition. Les transitions peuvent être dues au changement de type d'éléments (Type 3 ou Type 6), au décalage d'éléments d'un même type ou bien à la présence d'obstacles sur les parois des éléments réfractaires. Les différentes parties de la zone B illustrent ces possibilités. L'écoulement des fumées est perturbé par ces transitions et on intensifie ainsi le transfert de masse entre les fumées et les pièces d'empilage. Le début de la zone centrale B est constitué de deux rangs successifs pour lesquels la surface projetée globale (c'est-à-dire en tenant compte des deux rangs) des canaux est diminuée par rapport à celle de la zone chaude A. La fin de la zone centrale est marquée par la présence de deux rangs successifs pour lesquels la surface projetée globale est égale ou supérieure à la celle de la zone chaude. A l'intérieur de cette zone centrale, on peut ou non revenir périodiquement à des canaux de même largeur que dans la zone chaude, justement pour favoriser les effets de transition. Ainsi, sur un rang, on peut avoir une surface projetée égale à celle de la zone chaude mais sur la totalité des rangs constituant la zone centrale, la surface projetée sera inférieure à celle de la zone chaude. Le rétrécissement au moins local des canaux de la zone centrale caractérise l'empilage du régénérateur de l'invention. On préfère que plus de la moitié des rangs de la zone centrale participent à la diminution de la surface projetée globale de la zone centrale. Ces rangs "actifs" doivent représenter une hauteur cumulée minimale de 1 mètre pour que les effets soient significatifs. Tout autre arrangement pouvant intensifier les mécanismes de transfert à la paroi des espèces génératrices de poussières et, en particulier, tout arrangement permettant de créer des zones de transition pour favoriser les transferts de masse pourrait également convenir pour cette zone centrale B (pièces corruguées, décalage des canaux, mise en place d'obstacles...).

Dans la zone froide C, on a utilisé les mêmes éléments que dans la zone centrale B mais les canaux sont plus larges afin de favoriser l'écoulement des condensats. On évite ainsi le problème du bouchage lié à l'accumulation de condensats figés. Tout autre élément ou arrangement d'éléments permettant l'évacuation naturelle par écoulement des condensats pourrait également convenir.

Selon une variante de l'invention, on peut envisager que la zone froide C soit constituée de pièces résistant particulièrement bien aux cycles et aux chocs thermiques (quelque soit leur forme et leur arrangement). En effet, selon cette variante, on pourrait évacuer les condensats par chauffage de l'empilage selon des techniques connues de l'homme de l'art. Grâce à une surveillance régulière, on pourrait déclencher le débouchage thermique lorsque l'accumulation des condensats ou poussières devient suffisamment importante pour gêner le passage des fumées. Bien entendu, on pourrait substituer un débouchage chimique ou mécanique au débouchage thermique.

Les conceptions favorisant l'écoulement naturel ainsi que le débouchage thermique peuvent bien sûr être utilisés en combinaison.

La figure 2 montre une réalisation d'empilage avec de plus petits canaux que ceux de la zone A de la figure 1. La zone hachurée 4 de la figure 2 représente la surface projetée du canal. Il est en effet intéressant d'avoir de plus petits canaux car on augmente ainsi la surface d'échange fumées/éléments d'empilage de manière très significative. Ceci est rendu possible grâce à l'utilisation d'éléments cruciformes doubles 11, c'est à dire d'éléments résultant de la réunion de deux éléments cruciformes simples par l'extrémité de l'une de leurs ailes, et à un nouvel arrangement de ces éléments cruciformes doubles dans un rang, selon lequel les éléments de deux rangées adjacentes d'un rang donné sont décalés d'une demi-longueur. L'emploi d'éléments cruciformes doubles présente par ailleurs d'autres avantages : il accroît la stabilité de l'empilage et rend les transitions entre les différentes zones plus aisées.

La figure 3 montre une variante de réalisation dans laquelle les canaux 4' sont rectangulaires grâce à l'utilisation d'éléments cruciformes 21 dont deux ailes opposées sont plus courtes que les deux autres ailes. On augmente ainsi, par rapport à des canaux de section carrée comme ceux de la figure 2, la surface d'échange fumées/éléments d'empilage ce qui permet d'intensifier le phénomène de condensation. Tout autre élément ou arrangement d'éléments permettant d'augmenter la surface de dépôt des espèces susceptibles de générer des poussières satisfait aux exigences de la zone centrale B et entre également dans le cadre de l'invention.

La figure 4 montre encore un autre exemple de réalisation selon lequel les canaux 14 sont périodiquement décalés d'un rang au suivant. Ce type de solution permet de maximiser l'écart de température entre les fumées et le réfractaire grâce au décalage des canaux. L'augmentation de l'écart de température favorise le transport des espèces à la paroi et permet ainsi d'intensifier le dépôt des espèces génératrices de poussières. Par ailleurs, cet arrangement décalé augmente le niveau de turbulence ce qui conduit également à une intensification du dépôt.

La figure 5 montre un empilage dans lequel les canaux présentent un profil discontinu marqué par un changement de direction 15 de l'écoulement. Pour réaliser cette discontinuité on peut utiliser des éléments cruciformes dans lesquels deux des ailes sont inclinées. Suivant l'angle d'inclinaison de ces ailes et donc de la cassure dans l'empilage, on peut atteindre une augmentation de la surface d'échange fumées/éléments d'empilage de 4 à 13% (pour un angle de 45°). Cette augmentation de la surface d'échange permet d'accroître la condensation sur les parois. Ce type de conception et en particulier la discontinuité de la surface des canaux offre aussi l'avantage de perturber l'écoulement des fumées ce qui va également dans le sens d'un plus fort transfert de masse fumées/éléments d'empilage.

Les modes de réalisations donnés illustrent différents principes qui permettent de maximiser le transport vers les parois réfractaires des espèces chimiques susceptibles de générer des poussières, et ce, en vue d'intensifier le dépôt de ces espèces sur les parois des espèces constituant l'empilage. Ces modes de réalisation permettent aussi de minimiser les risques de bouchage et conservent une bonne efficacité thermique. De tels empilages autorisent par ailleurs le nettoyage de l'empilage par traitement thermique.

L'invention n'est pas limitée aux exemples spécifiques donnés; des combinaisons des réalisations données en exemple ou d'autres pièces ou réalisations entrent également dans le cadre de l'invention.

## Revendications

1. Régénérateur de four de verrerie comprenant un empilage de plusieurs rangs d'éléments réfractaires définissant une pluralité de canaux, **caractérisé en ce que** l'empilage comprend, dans le sens d'écoulement des gaz chauds, une première zone, située en entrée des gaz chauds, de refroidissement rapide des gaz chauds; une deuxième zone, ou zone centrale, de condensation et de captation des espèces chimiques susceptibles de générer des poussières; et une troisième zone, située en sortie des gaz refroidis, d'évacuation des condensats, les rangs d'éléments réfractaires empilés constituant ladite zone centrale comportant au moins deux rangs adjacents dont les canaux ont une surface projetée inférieure d'au moins 20% à celles des canaux des première et troisième zones.

2. Régénérateur selon la revendication 1, **caractérisé en ce que** les éléments réfractaires empilés constituant la première zone ont une surface présentant des obstacles.

3. Régénérateur selon la revendication 1, **caractérisé en ce que** la zone centrale est constituée de rangs dont les éléments réfractaires constitutifs sont décalés d'un rang au suivant de manière à perturber l'écoulement des gaz.

4. Régénérateur selon la revendication 1, **caractérisé en ce que** plus de la moitié des rangs de la zone centrale participent à la diminution de la surface projetée globale de la zone centrale.

5. Régénérateur selon la revendication 1, **caractérisé en ce que** les canaux de la zone centrale présentent au moins un changement de direction.

6. Régénérateur selon la revendication 1, **caractérisé en ce que** les canaux de la troisième zone ont une section transversale au moins aussi grande que celle des canaux de la zone centrale.

7. Régénérateur selon la revendication 1, **caractérisé en ce que** les surfaces des éléments réfractaires, qui constituent les rangs de la zone centrale et qui sont destinées à être au contact des gaz chauds, sont sensiblement lisses.

8. Régénérateur selon l'une quelconque des revendications 1 à 7, **caractérisé en ce que** les éléments réfractaires empilés sont des éléments de forme cruciforme.

9. Régénérateur selon l'une quelconque des revendications 1 à 8, **caractérisé en ce que** les éléments réfractaires empilés sont en matériau réfractaire électrofondu.

## Patentansprüche

1. Regenerator eines Glasschmelzofens, mit einem Stapel von mehreren Lagen feuerfester Elemente, die mehrere Kanäle bilden, **dadurch gekennzeichnet, daß** der Stapel in der Strömungsrichtung der heißen Gase eine am Einlaß der heißen Gase angeordnete erste Zone zum schnellen Abkühlen der heißen Gase, eine zweite oder mittlere Zone zum Kondensieren und Auffangen von chemischen Spezies, die Staub erzeugen können, und eine am Auslaß der gekühlten Gase angeordnete dritte Zone zum Ableiten der Kondensate aufweist, wobei die Reihen der gestapelten feuerfesten Elemente, welche die mittlere Zone bilden, mindestens zwei benachbarte Reihen aufweisen, deren Kanäle eine projizierte Fläche aufweisen, die mindestens 20 % kleiner ist als diejenigen der Kanäle der ersten und der dritten Zone.

2. Regenerator nach Anspruch 1, **dadurch gekennzeichnet, daß** die gestapelten feuerfesten Elemente, welche die erste Zone bilden, eine Hindernisse bildende Fläche haben.

3. Regenerator nach Anspruch 1, **dadurch gekennzeichnet, daß** die mittlere Zone aus Reihen besteht, deren diese bildenden feuerfesten Elemente von einer Reihe zur nächsten derart versetzt sind, daß sie das Strömen der Gase stören.

4. Regenerator nach Anspruch 1, **dadurch gekennzeichnet, daß** mehr als die Hälfte der Reihen der mittleren Zone an der Verringerung der gesamten projizierten Fläche der mittleren Zone teilhat.

5. Regenerator nach Anspruch 1, **dadurch gekennzeichnet, daß** die Kanäle der mittleren Zone wenigstens eine Richtungsänderung aufweisen.

6. Regenerator nach Anspruch 1, **dadurch gekennzeichnet, daß** die Kanäle der dritten Zone einen Querschnitt aufweisen, der mindestens so groß wie derjenige der Kanäle der mittleren Zone ist.

7. Regenerator nach Anspruch 1, **dadurch gekennzeichnet, daß** die Oberflächen der feuerfesten Elemente, welche die Reihen der mittleren Zone bilden und zum Kontakt mit den heißen Gasen bestimmt sind, im wesentlichen glatt sind.

8. Regenerator nach einem der Ansprüche 1 bis 7, **dadurch gekennzeichnet, daß** die gestapelten feuerfesten Elemente kreuzförmige Elemente sind.

9. Regenerator nach einem der Ansprüche 1 bis 8, **dadurch gekennzeichnet, daß** die gestapelten hitzbeständigen Elemente aus elektrisch geschmolzenem feuerfestem Material bestehen.

## Claims

1. A glassmaking furnace regenerator including a stack of several rows of refractory members defining a plurality of channels, **characterized in that** the stack comprises, in the hot gas flow direction, a first zone at the hot gas inlet, for rapidly cooling the hot gases, a second zone, or central zone, for condensing and trapping chemical species liable to generate dust, and a third zone, at the cooled gas outlet, for evacuating condensates, the rows of stacked refractory members constituting said central zone including at least two adjacent rows whose channels have a projected surface area at least 20% less than those of the channels of the first and third zones.

2. A regenerator according to claim 1, **characterized in that** the stacked refractory members constituting the first zone have a surface featuring obstacles.

3. A regenerator according to claim 1, **characterized in that** the central zone consists of rows whose refractory members are offset from one row to the next in order to disturb the flow of gases.

4. A regenerator according to claim 1, **characterized in that** more than half the rows of the central zone contribute to reducing the global projected surface area of the central zone.

5. A regenerator according to claim 1, **characterized in that** the channels of the central zone feature at least one change of direction.

6. A regenerator according to claim 1, **characterized in that** the channels of the third zone have a cross section at least as large as that of the channels of the central zone.

7. A regenerator according to claim 1, **characterized in that** the surfaces of the refractory members that constitute the rows of the central zone and which are intended to be in contact with hot gases are substantially smooth.

8. A regenerator according to any of claims 1 to 7, **characterized in that** the stacked refractory members are cruciform members.

9. A regenerator according to any of claims 1 to 8, **characterized in that** the stacked refractory members are made from an electrofused refractory material.
